# EUROPEAN PATENT SPECIFICATION

(11) **EP 2 780 686 B1**
(45) Date of publication and mention of the grant of the patent: **15.03.2017**
(21) Application number: 12798957.2
(22) Date of filing: 15.11.2012
(51) Int. Cl.: G01M 17/007

(54) **TEST DEVICE FOR SIMULATING MOTOR VEHICLE CRASHES AND METHOD FOR OPERATING A TEST DEVICE**
PRÜFVORRICHTUNG ZUR SIMULATION VON KRAFTFAHRZEUGSAUFPRALLEN UND VERFAHREN ZUM BETRIEB EINER PRÜFVORRICHTUNG
DISPOSITIF DE TEST POUR LA SIMULATION DE COLLISION D'UN VÉHICULE ET MÉTHODE POUR OPÉRER UN DISPOSITIF DE TEST

(30) Priority: 17.11.2011 DE 102011086581
(43) Date of publication of application: 24.09.2014
(60) Divisional application: 17152809.4
(73) Proprietor: Illinois Tool Works Inc., Glenview, IL 60025 (US)
(72) Inventor: BERAN, Dipl.-Ing Josef, 64380 Roßdorf (DE); PROBST, Thomas, 64823 Groß-Umstadt (DE)
(74) Representative: Trinks, Ole
(86) International application number: PCT/US2012/065164
(87) International publication number: WO 2013/074725

(56) References cited:
- WO-A1-2009/053412
- US-A1- 2002 026 820

## Description

The invention relates to a test device for simulating motor vehicle crashes according to the preamble of patent claim 1, and to a method for operating a test device.

Accordingly, the invention relates to a test device for simulating motor vehicle crashes, comprising a carriage arrangement which is arranged so as to be displaceable along a rail arrangement, a test setup which is arranged on the carriage arrangement and on which is arranged or can be attached at least one motor vehicle component to be tested, and comprising an acceleration unit by means of which a force can be transmitted to the carriage arrangement in order to accelerate the carriage arrangement, wherein the acceleration unit has a hydraulic drive cylinder with a piston and a piston rod which is connected to the carriage arrangement.

Such a test device, which is also referred to in the specialist field as a servo-hydraulic catapult system, is generally known in terms of its principle from vehicle engineering and serves to cope with the ever shorter development times in automobile construction and the requirements for greater passive safety. With such a test device, inverse crash tests can be carried out. In such tests, the deceleration forces which can occur in normal operation or in the case of a crash do not act on the motor vehicle components to be examined. Instead, in inverse crash tests the acceleration forces which correspond to the deceleration forces which can occur are applied to the motor vehicle components which are to be examined.

As a rule, in this context the vehicle components which are to be examined, such as seats, steering columns and steering wheels, windshields, dashboards, seatbelts and their attachment means, airbag systems and other components, are accelerated in a controlled fashion in a reinforced vehicle body, referred to as the tank, on a carriage, corresponding to the various accident situations, and the fracture behavior or component reliability is examined. In conventional test devices, the carriage is accelerated using, for example, a pushrod which is part of the acceleration unit. In particular, it is known to move the pushrod hydraulically out of a cylinder tube of a drive cylinder in accordance with a real deceleration curve. In order to be able to simulate the real deceleration curve, it is attempted here to control the hydraulic loading of the pushrod by means of a hydraulic valve.
For example it is known that the drive cylinder is controlled by means of a four-stage servovalve which is connected to a piston storage unit. Such a servo-hydraulic catapult system is known, for example, from a work's periodical RIQ, issue 1/1998, pages 2 to 4 of Mannesmann-Rexroth.

However, owing to the large acceleration which is necessary the hydraulic valve must have an extremely high flow rate and be able to react very quickly. In this context, multiple calibration attempts must be carried out in order to achieve adaptation to the real deceleration curve since such a hydraulic valve cannot be controlled within the test time of at maximum approximately 100 milliseconds. This conventional method is therefore comparatively costly.
The document US 2002/0026820 A discloses a test device for simulating motor vehicle crashes as well as a corresponding method.
Owing to this problem, the invention is based on the object of developing a test device for simulating motor vehicle crashes of the type mentioned in the introduction as well as a method for operating such a test device in such a way that a simulation of accident situations can be improved in a way which is easy to implement but nevertheless reproducible. In particular, a test device with a hydraulic drive cylinder is to be specified with which, in comparison with conventional test devices, the reproducibility of the tests and the simulation accuracy of the tests can be improved, and the number of necessary iteration steps can be reduced.
With respect to the test device, this object is achieved according to the invention in that at least one measuring pickup is provided for sensing a pressure which acts in the piston-side region of the drive cylinder and/or the pressure which acts in the piston-rod-side region of the drive cylinder, and in that a control device is provided which is configured to set a quantity of hydraulic fluid which is fed into the piston-side region or the piston-rod-side region of the drive cylinder, or discharged therefrom, per time unit, as a function of the pressure sensed in the drive cylinder, in such a way that an acceleration force which is transmitted to the carriage arrangement assumes a value which is defined or can be defined in advance.

According to the invention there is provision here that a first measuring pickup is provided for sensing the pressure which acts in the piston-side region of the drive cylinder, and a second measuring pickup is provided for sensing the pressure which acts in the piston-rod-side region of the drive cylinder, wherein the control device is configured to set the quantity of hydraulic fluid which is fed into the piston-side region of the drive cylinder per time unit, in such a way that the difference between the pressure which acts in the piston-side region and the pressure which acts in the piston-rod-side region assumes a value which is defined or can be defined in advance.

It is conceivable here that the acceleration unit has a hydraulic drive cylinder with a piston and a piston rod which is connected to the carriage arrangement which is to be accelerated, wherein quickly reacting control valves, for example a 2-control edge valve or a 1-control edge valve are provided by means of which hydraulic fluid can be applied to the drive cylinder. In the case of a 2-edge valve design, a pressure control edge which is connected to the piston-side region communicates fluidically with a high-pressure fluid reservoir, wherein a second return flow control edge of the piston-side region communicates fluidically with a pressureless return flow line.

In the case of a 1-edge valve design, the pressure control edge brings about fluidic communication of the high-pressure fluid reservoir with the piston-side region, wherein the rod-side region communicates fluidically directly with the high pressure or a low-pressure fluid reservoir.

The control device is configured here to set the quantity of hydraulic fluid which is fed to the drive cylinder per time unit in such a way that the acceleration force which is transmitted to the carriage arrangement assumes a value which is defined or can be defined in advance. The high-pressure fluid reservoir makes available a hydraulic fluid to which high pressure can be applied. In the case of the 1-edge design, the low-pressure fluid reservoir takes up the quantity of fluid which accumulates in the rod-side region in the piston movement.

The fluid which is subjected to high pressure flows via the pressure control edge to the piston-side region of the drive cylinder, wherein, depending on the design, the rod-side region is connected to the low-pressure reservoir or the high-pressure reservoir. A force is applied to the carriage arrangement with the resulting pressures in the two cylinder chambers via the piston face and the piston rod, and as a result the carriage arrangement is accelerated.

Further according to the invention there is provision here that a first measuring pickup is provided for sensing the pressure which acts in the piston-side region of the drive cylinder, and a second measuring pickup is provided for sensing the pressure which acts in the piston-rod-side region of the drive cylinder, wherein the control device is configured to set the quantity of hydraulic fluid which is fed into the piston-rod-side region of the drive cylinder, or discharged therefrom, per time unit, in such a way that the difference between the pressure which acts in the piston-side region and the pressure which acts in the piston-rod-side region assumes a value which is defined or can be defined in advance.
It is conceivable here that the acceleration unit has a hydraulic drive cylinder with a piston and a piston rod which is connected to the carriage arrangement which is to be accelerated, wherein a first valve is provided via which hydraulic fluid can be applied to the piston-side region of the drive cylinder, and wherein in addition a second valve is provided via which hydraulic fluid can be applied to the piston-rod-side region of the drive cylinder. The control device is configured here to set the quantity of hydraulic fluid which is fed into the piston-rod-side region of the drive cylinder, or discharged therefrom, per time unit in such a way that the acceleration force which is transmitted to the carriage arrangement assumes a value which is defined or can be defined in advance. In particular, the first valve serves to connect the piston-side region of the drive cylinder to a fluid reservoir where necessary. The high-pressure fluid reservoir makes available a hydraulic fluid which is subjected to high pressure. The second valve also serves to connect, when necessary, the piston-rod-side region of the drive cylinder to a second high-pressure fluid reservoir or to a pressureless fluid reservoir. The fluid reservoir which is assigned to the second valve makes available a hydraulic fluid whose pressure is higher than the pressure of the hydraulic fluid which is made available with the fluid reservoir which is connected to the first valve.

The fluid which is subjected to high pressure is fed via the first valve to the piston-side region of the drive cylinder, with the result that a force is applied to the carriage arrangement via the piston face and the piston rod, as a result of which the carriage arrangement is accelerated. Via the second valve, fluid can flow out of the piston-rod-side region of the drive cylinder in a defined fashion and/or fluid can flow into the piston-rod-side region of the drive cylinder in a defined fashion, and in this way influence the pressure and the resulting acceleration.

The acceleration unit preferably has a first and a second measuring pickup for sensing the pressure prevailing in the piston-side region of the drive cylinder, on the one hand, and the pressure prevailing in the piston-rod-side region of the drive cylinder, on the other.

In one preferred implementation of the test device according to the invention, the control device is connected via a setpoint-variable input to an open-loop control device in order to obtain a predefined acceleration profile as a setpoint variable. The control input of the control device is connected via a subtractor to the first and second measuring transducers in a signal-transmitting connection in order to obtain the difference between the pressures from the interior of the drive cylinder as a controlled variable, which are linked to the acceleration via the geometry of the piston, the structure of the test device and the mass of the carriage arrangement. The control device has a signal-transmitting connection by its control output to the valve in order to regulate as a manipulated variable the flow rate of the valve in such a way that the resulting acceleration of the carriage arrangement follows the acceleration profile.

In an alternative embodiment of the test device according to the invention, just a single measuring pickup is provided for sensing the pressure prevailing in the piston-side region of the drive cylinder or for sensing the pressure prevailing in the piston-rod-side region of the drive cylinder, wherein only the measuring signal of this measuring pickup is directly connected as a controlled variable to the control input of the control device via a signal line.

With respect to the method, the object on which the invention is based is solved according to the invention by means of the method steps specified below:
**1.** a pressure acting in the piston-side region of the drive cylinder is measured using a first measuring pickup;
**2.** a pressure acting in the piston-rod-side region of the drive cylinder is measured using a second measuring pickup; and
**3.** a quantity of hydraulic fluid which is fed to the piston-side region of the drive cylinder per time unit is set in such a way that the difference between the pressure acting in the piston-side region of the drive cylinder and the pressure acting in the piston-rod-side region of the drive cylinder assumes a value which is defined in advance.
Alternatively, the following method steps can occur instead of step 3:
- a quantity of hydraulic fluid which is fed into the piston-rod-side region of the drive cylinder, or discharged therefrom, per time unit is set in such a way that the difference between the pressure acting in the piston-side region of the drive cylinder and the pressure acting in the piston-rod-side region of the drive cylinder assumes the value which is defined in advance.
The advantages which can be achieved with the solution according to the invention are obvious. Accordingly, the test device according to the invention is characterized in that as a result of the active control of the manipulated variable the resulting acceleration of the carriage arrangement follows the predefined acceleration profile more precisely. Since the manipulated variable is the flow rate of the hydraulic fluid, the control takes place without wear and with a high degree of reproducibility.
In the text which follows, an exemplary embodiment of the test device according to the invention will be described in more detail with reference to the appended drawing, in which:
- Fig. 1: shows a signal flowchart of an exemplary 2-control edge embodiment of the test device according to the invention;
- Fig. 2: shows a signal flowchart of an exemplary 1-control edge embodiment of the test device according to the invention;
- Fig. 3: shows a signal flowchart of a further exemplary 1-control edge embodiment of the test device according to the invention; and
- Fig. 4: shows a signal flowchart of a further exemplary embodiment of the invention with a 2-way valve.

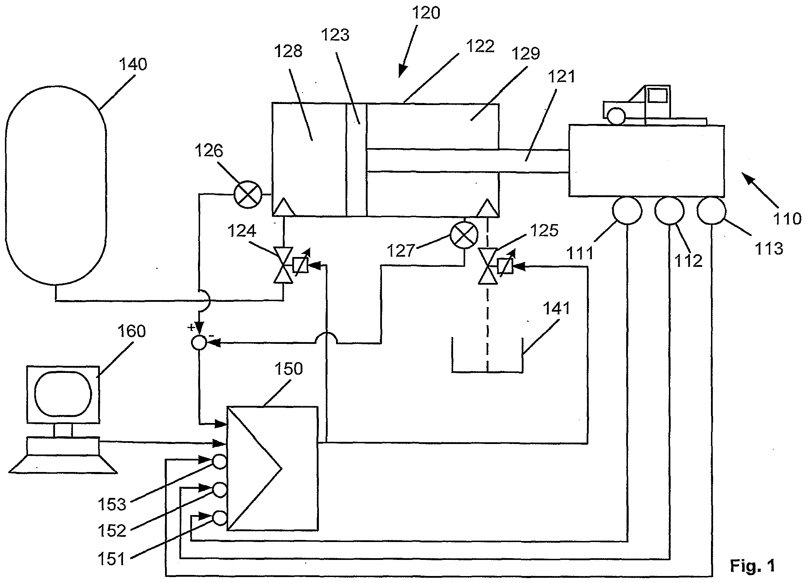

Fig. 1 is a schematic view of a signal flowchart of an exemplary embodiment of the test device 100 according to the invention. As illustrated, the test device 100 has a carriage arrangement 110 and an acceleration unit 120. The carriage arrangement 110 and the acceleration unit 120 are connected by means of a force-transmitting device 121. In the embodiment shown, the force-transmitting device 121 is a pushrod or piston rod. A test object, for example a motor vehicle or components thereof, can be arranged on the carriage arrangement 110.

The acceleration unit 120 has a hydraulic drive cylinder 122 with a piston 123 and a 2-edge valve (pressure control edge 124, return flow control edge 125). The piston 123, together with the piston rod 121 which is connected thereto, can be displaced axially along the axis of the drive cylinder 122 and separates two cylinder regions, the piston-side cylinder region 128 and the piston-rod-side cylinder region 129 from one another in a fluid-tight fashion.

In particular, in the embodiment of the test device 100 according to the invention which is illustrated in fig. 1 there is provision that the drive cylinder 122 is embodied as a double-acting cylinder, wherein the pressure control edge 124 (already mentioned), by means of which hydraulic fluid can be applied to the piston-side region 128 of the drive cylinder 122, is provided. In addition, the second synchronously opened return flow control edge 125 (also already mentioned), by means of which the piston-rod-side region 129 of the drive cylinder 122 is fluidically connected to the return flow line, is provided.

In the embodiment of the test device 100 according to the invention which is schematically illustrated in fig. 1, the pressure control edge 124 is fluidically connected by its side (not connected to the piston-side region 128 of the drive cylinder 122) to a first high-pressure fluid reservoir 140. The pressure of the fluid (hydraulic fluid) which is made available with the first fluid reservoir 140 is of the same magnitude as, and preferably greater than, the pressure P1 in the piston-side region 128 of the drive cylinder 122. The first fluid reservoir 140 may be, for example, a piston storage unit.

On the other hand, the return flow control edge 125 is fluidically connected, by its side which is not connected to the piston-rod-side region 129 of the drive cylinder 122, to the return flow reservoir 141. The pressure of the fluid (hydraulic fluid) which is made available with the second fluid reservoir 141 is lower than in the piston-rod-side region.

Accordingly, a hydraulic fluid which is under high pressure can be fed to the piston-side region 128 of the drive cylinder 122 via the pressure control edge 124, with the result that the pressure P1 prevailing in the piston-side region 128 of the drive cylinder 122 can be increased, and a pressure force acting on the piston 123 and the piston rod 121 can be transmitted, after having been reduced by the low opposing force in the rod-side region, to the carriage arrangement 110. In this way, the carriage arrangement can be accelerated.

The pressure control edge 124 and return flow control edge 125 can optionally also be implemented in separate valves.

In particular, the pressure force acting on the piston rod 121 is determined by the difference between the pressure P1 prevailing in the piston-side region 128 of the drive cylinder 122 and the pressure P2 prevailing in the piston-rod-side region 129 of the drive cylinder 122. In addition, the active area which is present in the piston-side region 128 on the piston 123, and the active area which is present in the piston-rod-side region 129 on the piston 123 influence the pressure force which is acting on the piston rod 121.

As already indicated, fluid, for example hydraulic fluid, can flow out of the piston-rod-side region 129 of the drive cylinder 122 via the second valve 125. In this way, the pressure P2 which occurs in the piston-rod-side region 129 and the resulting acceleration can be influenced.

As illustrated in fig. 1, the illustrated embodiment of the test device 100 according to the invention also has measuring pickups 126, 127 for sensing the pressure P1 in the piston-side region 128 of the drive cylinder 122, on the one hand, and for sensing the pressure P2 in the piston-rod-side region 129 of the drive cylinder 122, on the other.

In addition, a control device 150 is provided which, in the embodiment illustrated in fig. 1, is connected to a control unit 160, for example to a PC, via a signal-transmitting connection. A setpoint variable, which can be defined in advance and input, for example, manually into the control unit 160, is transmitted to the control device 150 from the control unit 160 via the signal-transmitting connection. The setpoint variable can be a predefinable acceleration value or else also a predefined acceleration profile (i.e. a predefined variation of the acceleration over time).

The control device 150 is configured to adjust a controlled variable according to the setpoint variable. In one preferred embodiment of the test device 100 according to the invention, the controlled variable is the difference between the pressure P1 which acts in the piston-side region 128 and the pressure P2 which acts in the piston-rod-side region 129. The difference pressure according to general laws of hydraulics and of physics is linked to the acceleration via the geometry of the piston 123, the structure of the test device 100 and the mass of the carriage arrangement 110. In particular it can be assumed that the difference pressure is proportional to an acceleration force which is transmitted to the carriage arrangement 110 via the acceleration unit 120.

The control device 150 is configured to change the flow rate of the 2-edge valve (pressure control edge 124, return flow control edge 125) as a manipulated variable and therefore influence the pressures P1, P2 in the drive cylinder 122 by means of a change in the quantity of fluid which is fed to the piston-side region 128, and discharged in the rod-side region 129, per time unit.

In an alternative embodiment of the test device 100 according to the invention, the control device 150 is configured to sense only the pressure P1 in the piston-side region 128 of the drive cylinder 122 of just one measuring pickup 127 and to evaluate it as a controlled variable.

The method for inventively simulating motor vehicle crashes has the following steps:
The control unit 160 outputs a setpoint variable to the control device 150 via the signal-transmitting connection. The setpoint variable corresponds to a desired acceleration of the carriage arrangement 110 at the respective time. In its chronological profile, the setpoint variable corresponds to the desired acceleration profile. The difference between the signals of the two pressure measuring pickups 126 and 127 is present as a controlled variable at the control device 150. The acceleration of the carriage arrangement 110 is linked to the controlled variable according to general laws of hydraulics and physics via the geometry of the piston 123 and the mass of the carriage arrangement 110.

The control device 150 controls as the manipulated variable the flow rate of the 2-edge valve (pressure control edge 124, return flow control edge 125) in such a way that the resulting acceleration of the carriage arrangement 110 follows the desired acceleration profile. For this purpose, the control device opens the 2-edge valve to such an extent that in each case so much pressurized fluid flows into the first cylinder region 128 from the pressure reservoir 140 and flows away from the region 129 to the pressureless reservoir 141 that the force applied to the piston by the pressure difference between the first and second cylinder regions 128, 129 brings about the desired acceleration of the carriage arrangement 110 by means of the force-transmitting device.

In various embodiments of the test device 100, inter alia proportional (P) controllers, proportional integral (PI) controllers or proportional integral differential (PID) controllers can be used as a control device 150.

The test device 100 can have further braking means for braking the carriage arrangement 110 again subsequent to the test phase. Furthermore, it is possible to configure the connection between the carriage arrangement 110 and the force-transmitting unit 121 in such a way that after the acceleration phase the carriage arrangement 110 becomes detached from the force-transmitting unit 121 by the piston 123, and is braked with suitable braking means independently of the piston 123 and the force-transmitting unit 121.

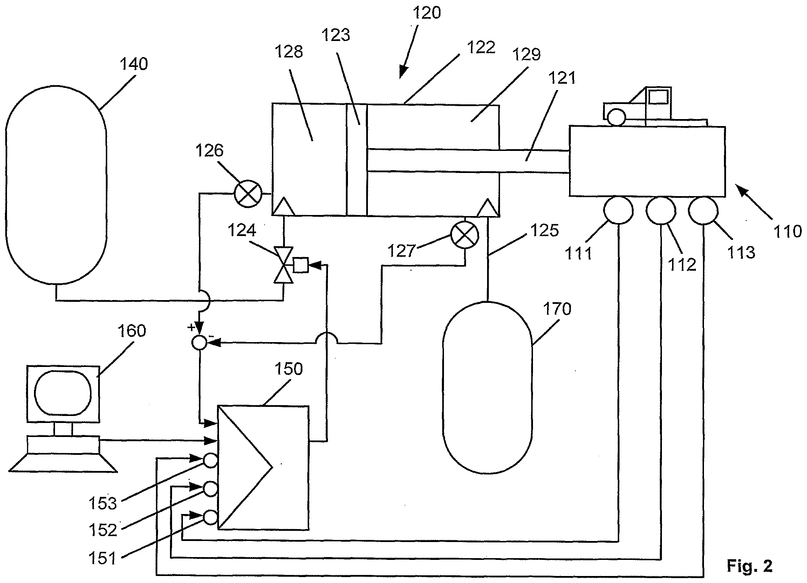

The embodiment with a 1-control edge valve is illustrated by way of example in fig. 2. In the embodiment of the inventive test device 100 which is illustrated schematically in fig. 2, the control edge 124 is fluidically connected by its side, which is not connected to the piston-side region 128 of the drive cylinder 122, to a first high-pressure fluid reservoir 140. The pressure of the fluid (hydraulic fluid) which is made available with the first fluid reservoir 140 is of the same magnitude as, and preferably larger than, the pressure P1 in the piston-side region 128 of the drive cylinder 122. The first fluid reservoir 140 may be, for example, a piston storage unit.

On the other hand, the piston-rod-side region 129 of the drive cylinder 122 is fluidically connected to the return flow reservoir 170. The pressure of the fluid (hydraulic fluid) which is made available with the second fluid reservoir 170 is lower than in the piston-rod-side region.

A hydraulic fluid which is under high pressure can accordingly be fed to the piston-side region 128 of the drive cylinder 122 via the control edge 124, with the result that the pressure P1 prevailing in the piston-side region 128 of the drive cylinder 122 can be increased, and a pressure force acting on the piston 123 and the piston rod 121 can be transmitted, after having been reduced by the low opposing force in the rod-side region, to the carriage arrangement 110. In this way, the carriage arrangement 110 can be accelerated. In the text which follows, the device described in fig. 2 corresponds to the embodiment already described in relation to fig. 1.

Accordingly, the method with the device from fig. 2 differs in that the control device 150 as a manipulated variable the flow rate of the 1-edge valve (control edge 124) in such a way that the resulting acceleration of the carriage arrangement 110 follows the desired acceleration profile.

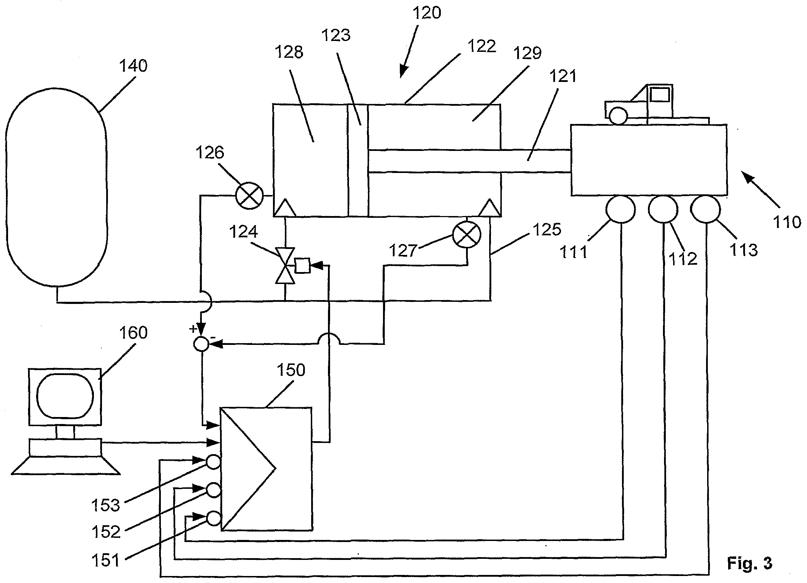

Fig. 3 illustrates by way of example a further embodiment with a 1-control edge valve. In the embodiment of the inventive test device 100 which is illustrated schematically in fig. 3, the control edge 124 is fluidically connected by its side, which is not connected to the piston-side region 128 of the drive cylinder 122, to a first high-pressure fluid reservoir 140. The pressure of the fluid (hydraulic fluid) which is made available with the first fluid reservoir 140 is of the same magnitude as, and preferably larger than, the pressure P1 in the piston-side region 128 of the drive cylinder 122. The first fluid reservoir 140 may be, for example, a piston storage unit.

The piston-rod-side region 129 of the drive cylinder 122 is also fluidically connected to the fluid reservoir 140. Since the active area of the piston in the piston-rod-side region is reduced by a value equal to the cross section of the piston rod, in the acceleration phase the opposing force on the piston rod side is smaller than or equal to the acceleration force on the piston rod side. As a result, the fluid from the piston-rod-side region is capable of flowing back counter to the pressure of the fluid reservoir 140.

Accordingly, a hydraulic fluid which is under high pressure can be fed to the piston-side region 128 of the drive cylinder 122 via the control edge 124, with the result that the pressure P1 prevailing in the piston-side region 128 of the drive cylinder 122 can be increased, and a pressure force which acts on the piston 123 and the piston rod 121 can be transmitted, after having been reduced by the low opposing force in the rod-side region, to the carriage arrangement 110. In this way, the carriage arrangement 110 can be accelerated.

In the text which follows, the device described in fig. 3 corresponds to the embodiment described in relation to fig. 2.

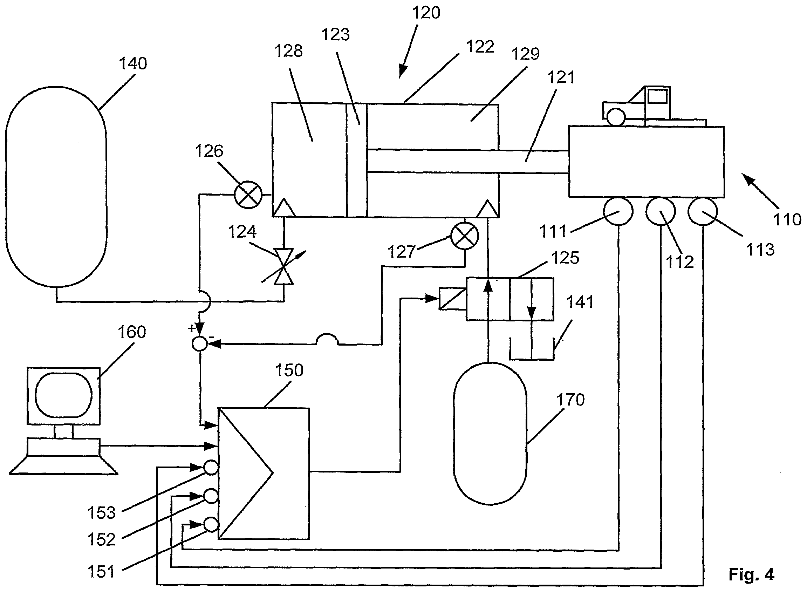

Fig. 4 shows a schematic signal flowchart for a further exemplary embodiment of the test device 100 according to the invention. The same parts as in figs. 1 to 3 are denoted by the same reference symbols.

In particular, in the embodiment of the inventive test device 100 which is illustrated in fig. 4 there is provision, as in the preceding embodiments, that the drive cylinder 122 is embodied as a double-acting cylinder, wherein a first valve 124 is provided via which hydraulic fluid can be applied to the piston-side region 128 of the drive cylinder 122. In addition, the second valve 125 is provided, via which hydraulic fluid can be applied to the piston-rod-side region 129 of the drive cylinder 122.

In the embodiment of the inventive test device 100 which is illustrated schematically in fig. 4, the first valve 124 is fluidically connected by its side, which is not connected to the piston-side region 128 of the drive cylinder 122, to a first fluid reservoir 140. The first fluid reservoir 140 can be, for example, a piston storage unit. On the other hand, the second valve 125 is fluidically connected, by its side which is not connected to the piston-rod-side region 129 of the drive cylinder 122, either to a second pressureless fluid reservoir 141 or a high-pressure fluid reservoir 170, depending on the actuation signal.

Accordingly, a hydraulic fluid which is under high pressure can be fed to the piston-side region 128 of the drive cylinder 122 via the first valve 124, with the result that the pressure P1 which prevails in the piston-side region 128 of the drive cylinder 122 can be increased, and a pressure force which acts on the piston 123 and the piston rod 121 can be transmitted to the carriage arrangement 110. In this way, the carriage arrangement 110 can be accelerated.

In particular, the pressure force acting on the piston rod 121 is determined by the difference between the pressure P1 prevailing in the piston-side region 128 of the drive cylinder 122 and the pressure P2 prevailing in the piston-rod-side region 129 of the drive cylinder 122. In addition, the active area, which is present in the piston-side region 128, on the piston 123 and the active area, which is present in the piston-rod-side region 129, on the piston 123 influence the pressure force which acts on the piston rod 121.

As already indicated, fluid, such as for example hydraulic fluid, can flow in and out of the piston-rod-side region 129 of the drive cylinder 122 via the second valve 125. In this way, the pressure P2 which occurs in the piston-rod-side region 129 and the resulting acceleration can be decisively influenced.

As illustrated in fig. 4, the illustrated embodiment of the test device 100 according to the invention also has measuring pickups 126, 127 for sensing the pressure P1 in the piston-side region 128 of the drive cylinder 122, on the one hand, and for sensing the pressure P2 in the piston-rod-side region 129 of the drive cylinder 122, on the other.

In addition, a control device 150 is also provided which, in the embodiment illustrated in fig. 4, is connected to a control unit 160, such as for example to a PC, via a signal-transmitting connection. Via the signal-transmitting connection, a setpoint variable which can be defined in advance and can, for example, be input manually into the control unit 160 is transmitted from the control unit 160 to the control device 150. The setpoint variable can be a predefined acceleration value or else also a predefined acceleration profile (i.e. a predefined variation of the acceleration over time).

The control device 150 is configured to adjust a controlled variable according to the setpoint variable. In one preferred embodiment of the test device 100 according to the invention, the controlled variable is the difference between the pressure P1 acting in the piston-side region 128 and the pressure P2 acting in the piston-rod-side region 129. According to general laws of hydraulics and of physics, the difference pressure is linked to the acceleration via the geometry of the piston 123, the structure of the test device 100 and the mass of the carriage arrangement 110. In particular it can be assumed that the difference pressure is proportional to an acceleration force which is transmitted to the carriage arrangement 110 via the acceleration unit 120.

The control device 150 is configured to change, as a manipulated variable, the flow rate through the second valve 125 and therefore influence the pressure P2 in the piston-rod-side region 129 of the drive cylinder 122 by changing the quantity of fluid which is fed into the piston-rod-side region 129, or discharged therefrom, per time unit.

In an alternative embodiment of the test device 100 according to the invention, the control device 150 is configured to sense only the pressure P2 in the piston-rod-side region 129 of the drive cylinder 122 from just one measuring pickup 127 and to evaluate it as a controlled variable.

The method for inventively simulating motor vehicle crashes has the following steps:
The control unit 160 outputs a setpoint variable to the control device 150 via the signal-transmitting connection. The setpoint variable corresponds to a desired acceleration of the carriage arrangement 110 at the respective time. In its chronological profile, the setpoint variable corresponds to the desired acceleration profile. The difference between the signals of the two pressure measuring pickups 126 and 127 is present as a controlled variable at the control device 150. The acceleration of the carriage arrangement 110 is linked to the controlled variable according to general laws of hydraulics and of physics via the geometry of the piston 123 and the mass of the carriage arrangement 110.

A constant quantity of hydraulic fluid is fed to the piston-side region 128 of the drive cylinder 122 per time unit. Feeding a constant pressure into the piston-side region 128 of the drive cylinder 122 gives rise to a constant acceleration force which acts on the carriage arrangement 110. A dynamic acceleration force is formed by dynamically changing the pressure in the piston-rod-side region 129 of the drive cylinder 122.

In particular, the control device 150 controls, as a manipulated variable, the flow rate of the second valve 125 in such a way that the resulting acceleration of the carriage arrangement 110 follows the desired acceleration profile. For this purpose, the control device opens the valve 125 to such an extent that in each case so much pressurized fluid flows out of the high-pressure reservoir 170 into the piston-rod-side region 129 of the drive cylinder 122 or flows into the pressureless reservoir via the valve 125 that the force applied to the piston 123 by the pressure difference between the piston-side region 128 and the piston-rod-side region 129 brings about the desired acceleration of the carriage arrangement 110 by means of the force-transmitting device 121.

In various embodiments of the test device 100, for example proportional (P) controllers, proportional integral (PI) controllers or proportional integral differential (PID) controllers can be used as the control device 150.

The control device 150 can have further braking means for braking the carriage arrangement 110 again subsequent to the test phase. Furthermore, it is possible to configure the connection between the carriage arrangement 110 and the force-transmitting unit 121 in such a way that after the acceleration phase the carriage arrangement 110 becomes detached from the force-transmitting unit 121 by the piston 123, and is braked with suitable braking means independently of the piston 123 and of the force-transmitting unit 121.

The invention is not restricted to the embodiments of the test device 100 which are described by way of example with reference to fig. 1 to fig. 4, but instead said invention results from a combination of all the features and advantages described herein.

## Claims

1. A test device (100) for simulating motor vehicle crashes, wherein the test device (100) has the following:
- a carriage arrangement (110) which is arranged so as to be displaceable along a rail arrangement;
- a test setup which is arranged on the carriage arrangement (110) and has at least one motor vehicle component to be tested; and
- an acceleration unit (120) by means of which a force can be transmitted to the carriage arrangement (110) in order to accelerate the carriage arrangement (110), wherein the acceleration unit (120) has a hydraulic drive cylinder (122) with a piston (123) and a piston rod (121) which is connected to the carriage arrangement (110),
wherein a control device (150) is provided which is configured to set a quantity of hydraulic fluid which is fed into the piston-side region (128) or the piston-rod-side region (129) of the drive cylinder (122), or discharged therefrom, per time unit, in such a way that an acceleration force which is transmitted to the carriage arrangement (110) assumes a value which is defined or can be defined in advance,
**characterized in that**
the drive cylinder (122) is a hydraulic drive cylinder, with which a hydraulic fluid directly acts on the piston (123),
**in that** a first measuring pickup (126) is provided for sensing the pressure (P1) which acts in the piston-side region (128) of the drive cylinder (122), and wherein a second measuring pickup (127) is provided for sensing the pressure (P2) which acts in the piston-rod-side region (129) of the drive cylinder (122); and
wherein the control device (150) is configured to set the quantity of hydraulic fluid which is fed into the piston-side region (128) or the piston-rod-side region (129) of the drive cylinder (122), or discharged therefrom, per time unit, as a function of the pressure (P1, P2) sensed in the drive cylinder (122), in such a way that the difference between the pressure (P1) which acts in the piston-side region (128) and the pressure (P2) which acts in the piston-rod-side region (129) assumes a value which is defined or can be defined in advance.

2. The test device (100) as claimed in claim 1,
wherein the difference between the pressure (P1) which acts in the piston-side region (128) and the pressure (P2) which acts in the piston-rod-side region (129) is proportional to an acceleration force transmitted to the carriage arrangement (110) via the acceleration unit (120); and wherein the value, which is defined or can be defined in advance, of the difference between the pressure (P1) which acts in the piston-side region (128) and the pressure (P2) which acts in the piston-rod-side region (129) corresponds to a setpoint value, which is defined or can be defined in advance, of an acceleration force.

3. The test device (100) as claimed in one of the preceding claims, wherein the drive cylinder (122) is embodied as a double-acting cylinder, wherein a first valve (124) is provided, by means of which hydraulic fluid can be applied to the piston-side region (128) of the drive cylinder (122), wherein the pressure (P1) which acts in the piston-side region (128) of the drive cylinder (122) can be set by actuating the first valve (124), and wherein a second valve (125) is provided, by means of which the hydraulic fluid can be applied to the piston-rod-side region (129) of the drive cylinder (122), wherein the pressure (P2) which acts in the piston-rod-side region (129) of the drive cylinder (122) can be set by actuating the second valve (125);
and wherein the control device (150) is also configured to set the quantity of hydraulic fluid which is fed into the piston-rod-side region (129) of the drive cylinder (122), or discharged therefrom, per time unit in such a way that the acceleration force which is transmitted to the carriage arrangement (110) assumes a value which is defined or can be defined in advance.

4. The test device (100) as claimed in claim 3,
wherein the control device (150) is configured to adjust the acceleration of the carriage arrangement (110) according to a predefined acceleration profile using the pressure (P2) in the piston-rod-side region (129) of the drive cylinder (122) as control variables, wherein the flow rate through the second valve (125) is the manipulated variable of the control device (150).

5. The test device (100) as claimed in claim 3 or 4, wherein in addition an open-loop control device (160) is provided which controls the flow rate through the first valve (124) according to a predefined value.

6. The test device (100) as claimed in claim 5,
wherein in addition a further control device is provided for adjusting the pressure (P1) in the piston-side region of the drive cylinder (122), connected to the first valve (124), according to a predefined constant value, wherein the flow rate through the first valve (124) is the manipulated variable of the further control device.

7. The test device (100) as claimed in one of the preceding claims, wherein the control device (150) is configured to set a quantity of hydraulic fluid, which is fed into the piston-rod-side region (129) of the drive cylinder (122), or discharged therefrom, per time unit as a function of the pressure (P1, P2) sensed in the drive cylinder (122), in such a way that at any time an acceleration force which is transmitted to the carriage arrangement (110) assumes a value which is defined or can be defined in advance.

8. The test device (100) as claimed in one of the preceding claims, wherein, in order to control the acceleration of the carriage arrangement (110) according to a predefined acceleration profile, the control device (150) has a P controller, PI controller or PID controller, wherein the pressure (P1) which acts in the piston-side region (128) of the drive cylinder (122) and/or the pressure (P2) which acts in the piston-rod-side region (129) of the drive cylinder (122) are/is the control variable.

9. A method for operating a test device (100) according to one of claims 1 to 8, wherein the method has the following method steps:
- a pressure (P1) which acts in the piston-side region (128) of the drive cylinder (122) is measured using a first measuring pickup (126);
- a pressure (P2) which acts in the piston-rod-side region (129) of the drive cylinder (122) is measured using a second measuring pickup (127);
- a pressurized hydraulic fluid is applied to the piston-side region (128) of the drive cylinder (122) via a fluid connection with a constant cross section, and a quantity of hydraulic fluid which is fed into the piston-rod-side region (129) of the drive cylinder (122), or discharged therefrom, per time unit is set in such a way that the difference between the pressure (P1) which acts in the piston-side region (128) of the drive cylinder (122) and the pressure (P2) which acts in the piston-rod-side region (129) of the drive cylinder (122) assumes a value which is defined in advance; or
a quantity of hydraulic fluid which is fed into the piston-side region (128) of the drive cylinder (122) per time unit is set in such a way that the difference between the pressure (P1) which acts in the piston-side region (128) of the drive cylinder (122) and the pressure (P2) which acts in the piston-rod-side region (129) of the drive cylinder (122) assumes a value which is defined in advance.

10. The method as claimed in claim 9,
wherein the difference between the pressure (P1) which acts in the piston-side region (128) and the pressure (P2) which acts in the piston-rod-side region (129) is proportional to an acceleration force which is transmitted to the carriage arrangement (110) via the acceleration unit (120); and wherein the value, which is defined or can be defined in advance, of the difference between the pressure (P1) which acts in the piston-side region (128) and the pressure (P2) which acts in the piston-rod-side region (129) corresponds to a setpoint value, which is defined or can be defined in advance, of an acceleration force.

## Patentansprüche

1. Prüfvorrichtung (100) zum Simulieren von Kraftfahrzeugzusammenstößen, wobei die Testvorrichtung (100) Folgendes aufweist:
- eine Waggonanordnung (110), die so angeordnet ist, dass sie entlang einer Schienenanordnung verschiebbar ist;
- eine Prüfanordnung, die auf der Waggonanordnung (110) angeordnet ist und zumindest eine zu prüfende Kraftfahrzeugkomponente aufweist; und
- eine Beschleunigungseinheit (120), mittels derer eine Kraft an die Waggonanordnung (110) übertragen werden kann, um die Waggonanordnung (110) zu beschleunigen, wobei die Beschleunigungseinheit (120) einen Hydraulikantriebszylinder (122) mit einem Kolben (123) und einer Kolbenstange (121) aufweist, die mit der Waggonanordnung (110) verbunden ist,
wobei eine Steuervorrichtung (150) bereitgestellt wird, die so konfiguriert ist, dass sie eine Menge an Hydraulikflüssigkeit, die in den kolbenseitigen Bereich (128) oder den kolbenstangenseitigen Bereich (129) des Antriebszylinders (122) eingespeist oder aus diesem ausgestoßen wird, pro Zeiteinheit auf eine solche Weise einstellt, dass eine Beschleunigungskraft, die an die Waggonanordnung (110) übertragen wird, einen Wert annimmt, der im Voraus definiert wird oder definiert werden kann,
**dadurch gekennzeichnet, dass**
der Antriebszylinder (122) ein Hydraulikantriebszylinder ist, mit dem eine Hydraulikflüssigkeit direkt auf den Kolben (123) einwirkt,
dadurch, dass ein erster Messaufnehmer (126) für das Erfassen des Drucks (P1), der auf den kolbenseitigen Bereich (128) des Antriebszylinders (122) einwirkt, bereitgestellt wird und wobei ein zweiter Messaufnehmer (127) für das Erfassen des Drucks (P2), der auf den kolbenstangenseitigen Bereich (129) des Antriebszylinders (122) einwirkt, bereitgestellt wird; und
wobei die Steuervorrichtung (150) so konfiguriert ist, dass sie die Menge an Hydraulikflüssigkeit, die in den kolbenseitigen Bereich (128) oder den kolbenstangenseitigen Bereich (129) des Antriebszylinders (122) eingespeist oder aus diesem ausgestoßen wird, pro Zeiteinheit als eine Funktion des im Antriebszylinder (122) erfassten Drucks (P1, P2) einstellt,
und zwar auf eine solche Weise, dass die Differenz zwischen dem Druck (P1), der in dem kolbenseitigen Bereich (128) wirkt, und dem Druck (P2), der in dem kolbenstangenseitigen Bereich (129) wirkt, einen Wert annimmt, der im Voraus definiert wird oder definiert werden kann.

2. Prüfvorrichtung (100) wie in Anspruch 1 beansprucht, wobei die Differenz zwischen dem Druck (P1), der in dem kolbenseitigen Bereich (128) wirkt, und dem Druck (P2), der in dem kolbenstangenseitigen Bereich (129) wirkt, proportional zu einer Beschleunigungskraft ist, die an die Waggonanordnung (110) über die Beschleunigungseinheit (120) übertragen wird; und wobei der im Voraus definierte oder definierbare Wert der Differenz zwischen dem Druck (P1), der in dem kolbenseitigen Bereich (128) wirkt, und dem Druck (P2), der in dem kolbenstangenseitigen Bereich (129) wirkt, einem Sollwert einer Beschleunigungskraft entspricht, der im Voraus definiert wird oder definiert werden kann.

3. Prüfvorrichtung (100) wie in einem der vorstehenden Ansprüche beansprucht,
wobei der Antriebszylinder (122) als ein doppelt wirkender Zylinder ausgeführt ist, wobei ein erstes Ventil (124) bereitgestellt wird, mittels dessen eine Hydraulikflüssigkeit an den kolbenseitigen Bereich (128) des Antriebszylinders (122) beaufschlagt werden kann, wobei der Druck (P1), der auf den kolbenseitigen Bereich (128) des Antriebszylinders (122) einwirkt, durch Betätigen des ersten Ventils (124) eingestellt werden kann, und wobei ein zweites Ventil (125) bereitgestellt wird, mittels dessen eine Hydraulikflüssigkeit an den kolbenstangenseitigen Bereich (129) des Antriebszylinders (122) beaufschlagt werden kann, wobei der Druck (P2), der auf den kolbenstangenseitigen Bereich (129) des Antriebszylinders (122) einwirkt, durch Betätigen des zweiten Ventils (125) eingestellt werden kann; und wobei die Steuervorrichtung (150) außerdem so konfiguriert ist, dass sie die Menge an Hydraulikflüssigkeit, die in den kolbenstangenseitigen Bereich (129) des Antriebszylinders (122) eingespeist oder aus diesem ausgestoßen wird, pro Zeiteinheit auf eine solche Weise einstellt, dass die Beschleunigungskraft, die an die Waggonanordnung (110) übertragen wird, einen Wert annimmt, der im Voraus definiert wird oder definiert werden kann.

4. Prüfvorrichtung (100) wie in Anspruch 3 beansprucht, wobei die Steuervorrichtung (150) so konfiguriert ist, dass die Beschleunigung der Waggonanordnung (110) gemäß einem zuvor definierten Beschleunigungsprofil angepasst wird, und zwar unter Verwendung des Drucks (P2) im kolbenseitigen Bereich (129) des Antriebszylinders (122) als Regelgrößen, wobei die Strömungsgeschwindigkeit durch das zweite Ventil (125) die Stellgröße der Steuervorrichtung (150) ist.

5. Prüfvorrichtung (100) wie in Anspruch 3 oder 4 beansprucht, wobei des Weiteren eine Steuervorrichtung (160) bereitgestellt wird, welche die Strömungsgeschwindigkeit durch das erste Ventil (124) gemäß einem zuvor festgelegten Wert steuert.

6. Prüfvorrichtung (100) wie in Anspruch 5 beansprucht, wobei des Weiteren eine weitere Steuervorrichtung bereitgestellt wird, um den Druck (P1) im kolbenseitigen Bereich des Antriebszylinders (122), der mit dem ersten Ventil (124) verbunden ist, gemäß einem vorher festgelegten konstanten Wert anzupassen, wobei die Strömungsgeschwindigkeit durch das erste Ventil (124) die Stellgröße der weiteren Steuervorrichtung ist.

7. Prüfvorrichtung (100) wie in einem der vorstehenden Ansprüche beansprucht,
wobei die Steuervorrichtung (150) so konfiguriert ist, dass sie eine Menge an Hydraulikflüssigkeit, die in den kolbenstangenseitigen Bereich (129) des Antriebszylinders (122) eingespeist oder aus diesem ausgestoßen wird, pro Zeiteinheit als eine Funktion des in dem Antriebszylinder (122) erfassten Drucks (P1, P2) einstellt, und zwar auf eine solche Weise, dass zu jedem Zeitpunkt eine Beschleunigungskraft, die an die Waggonanordnung (110) übertragen wird, einen Wert annimmt, der im Voraus definiert wird oder definiert werden kann.

8. Prüfvorrichtung (100) wie in einem der vorstehenden Ansprüche beansprucht,
wobei, um die Beschleunigung der Waggonanordnung (110) nach einem vorher festgelegten Beschleunigungsprofil zu steuern, die Steuervorrichtung (150) einen P-Regler, PI-Regler oder PID-Regler aufweist, wobei der Druck (P1), der auf den kolbenseitigen Bereich (128) des Antriebszylinders (122) einwirkt, und/oder der Druck (P2), der auf den kolbenstangenseitigen Bereich (129) des Antriebszylinders (122)einwirkt, die Regelgröße ist bzw. sind.

9. Verfahren zum Betreiben einer Prüfvorrichtung (100) nach einem der Ansprüche 1 bis 8, wobei das Verfahren folgende Schritte umfasst:
- Messen eines Drucks (P1), der in dem kolbenseitigen Bereich (128) des Antriebszylinders (122) wirkt, mittels eines ersten Messaufnehmers (126) ;
- Messen eines Drucks (P2), der in dem kolbenstangenseitigen Bereich (129) des Antriebszylinders (122) wirkt, mittels eines zweiten Messaufnehmers (127);
- Beaufschlagen des kolbenseitigen Bereichs (128) des Antriebszylinders (122) mit einer druckbeaufschlagten Hydraulikflüssigkeit über eine Fluidverbindung mit einem konstanten Querschnitt, Einstellen einer Menge an Hydraulikflüssigkeit, die in den kolbenstangenseitigen Bereich (129) des Antriebszylinders (122) eingespeist oder aus diesem ausgestoßen wird, pro Zeiteinheit, so dass die Differenz zwischen dem Druck (P1), der in dem kolbenseitigen Bereich (128) des Antriebszylinders (122) wirkt, und dem Druck (P2), der in dem kolbenstangenseitigen Bereich (129) des Antriebszylinders (122) wirkt, einen Wert annimmt, der im Voraus definiert wird oder definiert werden kann; oder Einstellen einer Menge an Hydraulikflüssigkeit, die in den kolbenseitigen Bereich (128) des Antriebszylinders (122) eingespeist wird, pro Zeiteinheit, so dass die Differenz zwischen dem Druck (P1), der in dem kolbenseitigen Bereich (128) des Antriebszylinders (122) wirkt, und dem Druck (P2), der in dem kolbenstangenseitigen Bereich (129) des Antriebszylinders (122) wirkt, einen Wert annimmt, der im Voraus definiert wird.

10. Verfahren wie in Anspruch 9 beansprucht, wobei die Differenz zwischen dem Druck (P1), der in dem kolbenseitigen Bereich (128) wirkt, und dem Druck (P2), der in dem kolbenstangenseitigen Bereich (129) wirkt, proportional zu einer Beschleunigungskraft ist, die an die Waggonanordnungen (110) über die Beschleunigungseinheit (120) übertragen wird; und wobei der im Voraus definierte oder definierbare Wert der Differenz zwischen dem Druck (P1), der in dem kolbenseitigen Bereich (128) wirkt, und dem Druck (P2), der in dem kolbenstangenseitigen Bereich (129) wirkt, einem Sollwert der Beschleunigungskraft entspricht, der im Voraus definiert wird oder definiert werden kann.

## Revendications

1. Dispositif de test (100) pour simuler des collisions de véhicules automobiles, comportant ce qui suit :
- un agencement de chariot (110) qui est disposé de façon à pouvoir se déplacer le long d'un agencement de rail ;
- un montage d'essai qui est disposé sur l'agencement de chariot (110) et comporte au moins un composant de véhicule à moteur à tester ; et
- une unité d'accélération (120) au moyen de laquelle on peut transmettre à l'agencement de chariot (110) afin de l'accélérer, dans lequel l'unité d'accélération (120) comporte un vérin (122) d'entraînement hydraulique ayant un piston (123) et une tige (121) de piston qui est raccordée à l'agencement de chariot (110),
dans lequel on trouve un dispositif de commande (150) qui est configuré pour fixer une quantité de fluide hydraulique qui alimente la zone côté-piston (128) ou la zone côté-tige-de-piston (129) du vérin (122) d'actionnement, ou en est évacuée, par unité de temps, de telle façon que la force d'accélération qui est transmise à l'agencement de chariot (110) prend une valeur qui est définie ou peut être définie à l'avance, **caractérisé en ce que**
le vérin (122) d'actionnement est un vérin d'entraînement hydraulique, avec lequel un fluide hydraulique agit directement sur le piston (123),
un premier capteur de mesures (126) est mis en place pour détecter la pression (P1) qui agit dans la zone côté-piston (128) du vérin (122) d'actionnement, et un second capteur de mesures (127) est mis en place pour détecter la pression (P2) qui agit dans la zone côté-tige-de-piston (129) du vérin (122) d'actionnement,
dans lequel le dispositif de commande (150) est configuré pour fixer la quantité de fluide hydraulique qui alimente la zone côté-piston (128) ou la zone côté-tige-de-piston (129) du vérin (122) d'actionnement, ou en est évacuée, par unité de temps, en fonction de la pression (P1, P2) détectée dans le vérin (122) d'actionnement, de telle façon que la différence entre la pression (P1) qui agit dans la zone côté-piston (128) et la pression (P2) qui agit dans la zone côté-tige-de-piston (129) prend une valeur qui est définie ou peut être définie à l'avance.

2. Dispositif de test (100) selon la revendication 1, dans lequel la différence entre la pression (P1) qui agit dans la zone côté-piston (128) et la pression (P2) qui agit dans la zone côté-tige-de-piston (129) est proportionnelle à la force d'accélération transmise à l'agencement de chariot (110) par le biais de l'unité d'accélération (120) ; et dans lequel la valeur, qui est définie ou peut être définie à l'avance, de la différence entre la pression (P1) qui agit dans la zone côté-piston (128) et la pression (P2) qui agit dans la zone côté-tige-de-piston (129) correspond à une valeur de consigne, qui est définie ou peut être définie à l'avance, d'une force d'accélération.

3. Dispositif de test (100) selon l'une quelconque des revendications précédentes, dans lequel le vérin (122) d'actionnement est réalisé sous forme de vérin à double effet, dans lequel se trouve une première vanne (124) au moyen de laquelle on peut appliquer du fluide hydraulique à la zone côté-piston (128) du vérin (122) d'actionnement, dans lequel on peut régler la pression (P1) qui agit dans la zone côté-piston (128) du vérin (122) d'actionnement en actionnant la première vanne (124), et dans lequel se trouve une seconde vanne (125) au moyen de laquelle on peut appliquer du fluide hydraulique à la zone côté-tige-de-piston (129) du vérin (122) d'actionnement, dans lequel on peut régler la pression (P2) qui agit dans la zone côté-tige-de-piston (129) du vérin (122) d'actionnement en actionnant la seconde vanne (125) ; et
dans lequel le dispositif de commande (150) est aussi configuré pour fixer la quantité de fluide hydraulique qui alimente la zone côté-tige-de-piston (129) du vérin (122) d'actionnement, ou en est évacuée, par unité de temps de telle façon que la force d'accélération qui est transmise à l'agencement de chariot (110) prend une valeur qui est définie ou peut être définie à l'avance.

4. Dispositif de test (100) selon la revendication 3, dans lequel le dispositif de commande (150) est configuré pour régler l'accélération de l'agencement de chariot (110) suivant un profil d'accélération prédéfini en utilisant la pression (P2) dans la zone côté-tige-de-piston (129) du vérin (122) d'actionnement comme variable de contrôle, dans lequel le débit à travers la seconde vanne (125) est la variable de commande du dispositif de commande (150).

5. Dispositif de test (100) selon la revendication 3 ou 4, dans lequel on trouve en plus un dispositif de commande en boucle ouverte (160) qui commande le débit à travers la première vanne (124) suivant une valeur prédéfinie.

6. Dispositif de test (100) selon la revendication 5, dans lequel on trouve en plus un autre dispositif de commande pour régler la pression (P1) dans la zone côté-piston du vérin (122) d'actionnement, raccordé à la première vanne (124), suivant une valeur constante prédéfinie, dans lequel le débit à travers la première vanne (124) est la variable de commande de l'autre dispositif de commande.

7. Dispositif de test (100) selon l'une quelconque des revendications précédentes, dans lequel le dispositif de commande (150) est configuré pour fixer une quantité de fluide hydraulique qui alimente la zone côté-tige-de-piston (129) du vérin (122) d'actionnement, ou en est évacuée, par unité de temps en fonction de la pression (P1, P2) détectée dans le vérin (122) d'actionnement, de telle façon qu'à tout moment la force d'accélération qui est transmise à l'agencement de chariot (110) prend une valeur qui est définie ou peut être définie à l'avance.

8. Dispositif de test (100) selon l'une quelconque des revendications précédentes, dans lequel, afin de commander l'accélération de l'agencement de chariot (110) suivant un profil d'accélération prédéfini, le dispositif de commande (150) comporte un panneau de commande PA, un gestionnaire des entrées physiques ou un gestionnaire des E-S physiques, dans lequel la pression (P1) qui agit dans la zone côté-piston (128) du vérin (122) d'actionnement et/ou la pression (P2) qui agit dans la zone côté-tige-de-piston (129) du vérin (122) d'actionnement sont/est la variable de contrôle.

9. Procédé pour faire fonctionner un dispositif de test (100) selon l'une quelconque des revendications 1 à 8, dans lequel le procédé comporte les étapes de procédé ci-après :
- on mesure une pression (P1) qui agit dans la zone côté-piston (128) du vérin (122) d'actionnement au moyen d'un premier capteur de mesures (126) ;
- on mesure une pression (P2) qui agit dans la zone côté-tige-de-piston (129) du vérin (122) d'actionnement au moyen d'un second capteur de mesures (127) ;
- on applique un fluide hydraulique sous pression à la zone côté-piston (128) du vérin (122) d'actionnement via un raccordement fluidique ayant une section transversale constante, et on fixe une quantité de fluide hydraulique qui alimente la zone côté-tige-de-piston (129) du vérin (122) d'actionnement, ou en est évacuée, par unité de temps de telle façon que la différence entre la pression (P1) qui agit dans la zone côté-piston (128) du vérin (122) d'actionnement et la pression (P2) qui agit dans la zone côté-tige-de-piston (129) du vérin (122) d'actionnement prend une valeur qui est définie ou peut être définie à l'avance ; ou on fixe une quantité de fluide hydraulique qui alimente la zone côté-piston (128) du vérin (122) d'actionnement par unité de temps de telle façon que la différence entre la pression (P1) qui agit dans la zone côté-piston (128) du vérin (122) d'actionnement et la pression (P2) qui agit dans la zone côté-tige-de-piston (129) du vérin (122) d'actionnement prend une valeur qui est définie ou peut être définie à l'avance.

10. Procédé selon la revendication 9, dans lequel la différence entre la pression (P1) qui agit dans la zone côté-piston (128) et la pression (P2) qui agit dans la zone côté-tige-de-piston (129) est proportionnelle à la force d'accélération qui est transmise à l'agencement de chariot (110) par le biais de l'unité d'accélération (120) ; et
dans lequel la valeur, qui est définie ou peut être définie à l'avance, de la différence entre la pression (P1) qui agit dans la zone côté-piston (128) et la pression (P2) qui agit dans la zone côté-tige-de-piston (129) correspond à une valeur de consigne, qui est définie ou peut être définie à l'avance, d'une force d'accélération.
